# EUROPEAN PATENT SPECIFICATION

(11) **EP 3 598 567 B1**
(45) Date of publication and mention of the grant of the patent: **04.11.2026**
(21) Application number: 18861668.4
(22) Date of filing: 09.08.2018
(51) Int. Cl.: H01M 10/613, H01M 10/647, H01M 10/617, H01M 10/6557, H01M 10/6567, H01M 50/211

(54) **COOLING JACKET HAVING NONUNIFORM FLOW PATHS, FOR COOLING BATTERY CELL SURFACE, AND BATTERY MODULE INCLUDING SAME**
KÜHLMANTEL MIT UNGLEICHFÖRMIGEN STRÖMUNGSWEGEN ZUR KÜHLUNG VON BATTERIEZELLENOBERFLÄCHEN UND BATTERIEMODUL DAMIT
CHEMISE DE REFROIDISSEMENT AYANT DES TRAJETS D'ÉCOULEMENT NON UNIFORMES, POUR REFROIDIR UNE SURFACE DE CELLULE DE BATTERIE, ET MODULE DE BATTERIE LE COMPRENANT

(30) Priority: 29.09.2017 KR 20170127474
(43) Date of publication of application: 22.01.2020
(73) Proprietor: LG Energy Solution, Ltd., Seoul 07335 (KR)
(72) Inventor: CHA, Hun, Daejeon 34122 (KR); SON, Sang-Il, Daejeon 34122 (KR); CHOI, Yong-Seok, Daejeon 34122 (KR); RYU, Sang-Woo, Daejeon 34122 (KR)
(74) Representative: Plasseraud IP
(86) International application number: PCT/KR2018/009118
(87) International publication number: WO 2019/066244

(56) References cited:
- WO-A1-2015/113161
- DE-A1- 102013 005 475
- KR-A- 20120 012 303
- KR-A- 20150 140 121
- KR-A- 20160 026 029
- KR-A- 20160 030 724
- KR-A- 20160 117 955
- KR-A- 20170 098 590
- US-A1- 2006 049 799
- US-A1- 2014 272 496
- US-A1- 2017 122 679

## Description

### TECHNICAL FIELD

The present disclosure relates to a cooling jacket for cooling a surface of a battery cell, and more particularly, to a cooling jacket optimized to cool a battery cell that exhibits a non-uniform heat generation pattern depending on regions due to an electrode lead portion having a greatest heat generation, and a battery module including the cooling jacket.

The present application claims priority to Korean Patent Application No. 10-2017-0127474 filed on September 29, 2017 in the Republic of Korea.

### BACKGROUND ART

A secondary battery cell includes positive and negative electrode current collectors, a separator, active materials and an electrolyte, and may be repeatedly charged and discharged by electrochemical reactions between components. Since the battery cells are densely provided in a compact space of a battery module, it is important to easily release the heat generated by each battery cell. Since the battery cell is charged and discharged due to an electrochemical reaction, if the heat of the battery module generated during the charging and discharging process is not effectively removed, heat accumulation occurs, which may promote the degradation of the battery module, and in more severe cases, cause ignition or explosion.

Thus, a high-output large-capacity battery module and a battery pack having the battery module are required to have a cooling device for cooling battery cells included therein.

Generally, the cooling device may adopt two cooling types, namely indirect air cooling and indirect water cooling. The indirect air cooling uses a simple structure, but its cooling performance is somewhat low and the battery module has a low energy density.

The indirect water cooling has better cooling performance than the air cooling but is insufficient to satisfy the cooling performance required by a battery module or a battery pack of a high heat generation condition due to a heat transfer path or the like.

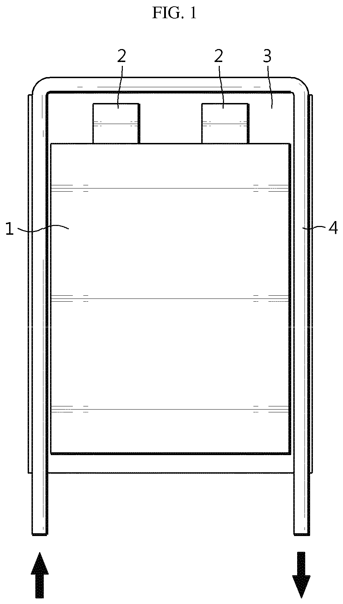

FIG. 1 is a diagram for illustrating a method for cooling a battery cell 1 by using a conventional perimeter cooling plate. Referring to FIG. 1, the perimeter cooling plate includes a thermally conductive sheet-type plate 3 made of aluminum or aluminum alloy and a cooling tube 4 forming a coolant flow path at an edge of the sheet-type plate. A coolant is supplied to the cooling tube 4 in a state where the battery cell 1 is in contact with one surface of the perimeter cooling plate, to absorb the heat of the battery cell 1. The perimeter cooling plate has better cooling performance in comparison to existing general cooling plates.

Meanwhile, since the electrode lead (2) of the battery cell serves as a terminal electrically connected to an external device or other battery cells, an adjacent portion of the electrode lead generates the greatest heat. Thus, seeing the heat generation pattern of the battery cell, a non-uniform heat generation pattern where the temperature is higher as being closer to the electrode lead is exhibited, even though there is a somewhat difference.

However, since the perimeter cooling plate is designed without considering the non-uniform heat generation pattern inside the battery cell as described above, the temperature deviation inside the battery cell is still large even when the perimeter cooling plate is used. Thus, it is necessary to design a new cooling plate that is capable of cooling a high-temperature portion inside the battery cell more effectively.

Examples of background art can be found in US2014/272496A1, DE102013005475A1, US2006/049799A1, US2017/122679A1, KR20170098590A and WO2015/113161A1.

### DISCLOSURE

### Technical Problem

The present disclosure is designed to solve the problems of the related art, and therefore the present disclosure is directed to providing a cooling jacket for cooling a battery cell, which may reduce a temperature deviation according to a non-uniform heat generation pattern of the battery cell, and a battery module including the cooling jacket.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

According to the present invention, there is provided a cooling jacket, which includes a plate-shaped cooling plate and a plurality of cooling channels provided in the cooling plate and is adapted to be disposed close to one surface of a battery cell to absorb heat of the battery cell, wherein the plurality of cooling channels include a coolant supply manifold channel and a coolant discharge manifold channel respectively disposed at both sides of the cooling plate and extending from the inside of the cooling plate to the outside so that one end thereof is exposed out; and non-uniform cooling channels disposed to be spaced apart from each other by a predetermined distance and having both ends respectively connected to the coolant supply manifold channel and the coolant discharge manifold channel across the cooling plate, the non-uniform cooling channels having non-uniform widths. The width of the non-uniform cooling channels is greater than thickness of the non-uniform cooling channels.

Among the non-uniform cooling channels, non-uniform cooling channels located inside a first low-temperature portion of the cooling plate, which is to be in contact with a drawing portion of an electrode lead of the battery cell have a greater width than non-uniform cooling channels located inside the other portions of the cooling plate.

The widths of the non-uniform cooling channels may be gradually increased from a second low-temperature portion of the cooling plate, which corresponds to a central region of the cooling plate, toward the first low-temperature portion of the cooling plate.

The plurality of cooling channels may have a tubular shape and are embedded inside the cooling plate.

The cooling plate has edge portions respectively formed at both sides thereof along a longitudinal direction of the cooling plate and having a greater thickness than the other portions thereof. The coolant supply manifold channel and the coolant discharge manifold channel are located inside the edge portions.

The plurality of cooling channels may be formed integrally with the cooling plate.

The cooling jacket may further comprise flexible connection tubes respectively coupled to openings of the coolant supply manifold channel and the coolant discharge manifold channel.

The non-uniform cooling channels may be disposed to intersect the coolant supply manifold channel and the coolant discharge manifold channel.

Both ends of the non-uniform cooling channels may have a rounded shape.

In another aspect of the present disclosure, there may also be provided a battery module, comprising: battery cells disposed to be in close contact with an upper surface and a lower surface of cooling jackets defined above; and stacking frames configured to support the cooling jackets and the battery cells and provided to be assembled with each other so as to be stacked in one direction, wherein the stacking frames are assembled with each other to form a tube forming hole that serves as a coolant supply and discharge tube along a stacking direction thereof, and one end of the coolant supply manifold channel and one end of the coolant discharge manifold channel are respectively connected to the coolant supply and discharge tube.

### Advantageous Effects

According to an embodiment of the present disclosure, since the cooling channel width of the cooling jacket is expanded as being closer to the electrode lead so that a flow rate of the coolant increases, a high-temperature portion inside the battery cell may be effectively cooled. Thus, the temperature deviation inside the battery cell may be remarkably reduced.

In addition, since a plurality of cooling channels are provided inside the cooling jacket, the heat transfer path is reduced in comparison to a conventional perimeter cooling plate, and thus the thermal conductivity may be greatly improved.

According to another embodiment of the present disclosure, by using the cooling jacket as described above, it is possible to provide a battery module having excellent safety and life characteristics due to high cooling performance.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing a cooling structure of a conventional perimeter cooling plate.
FIG. 2 is a perspective view showing a cooling jacket according to an embodiment of the present disclosure.
FIG. 3 is a perspective view showing an inner configuration of the cooling jacket of FIG. 2.
FIG. 4 is a perspective view showing that a battery cell is disposed at the cooling jacket of FIG. 2.
FIG. 5 is a diagram showing a plurality of cooling channels according to an embodiment of the present disclosure.
FIG. 6 is a diagram showing a connection portion of a non-uniform cooling channel according to another embodiment of the present disclosure.
FIG. 7 is a diagram showing a part of the plurality of cooling channels according to still another embodiment of the present disclosure.
FIG. 8 is a perspective view schematically showing a battery module according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In addition, in the description of the present disclosure, a detailed description of the related configuration or function is omitted if it is determined that the gist of the present disclosure may be obscured by the description.

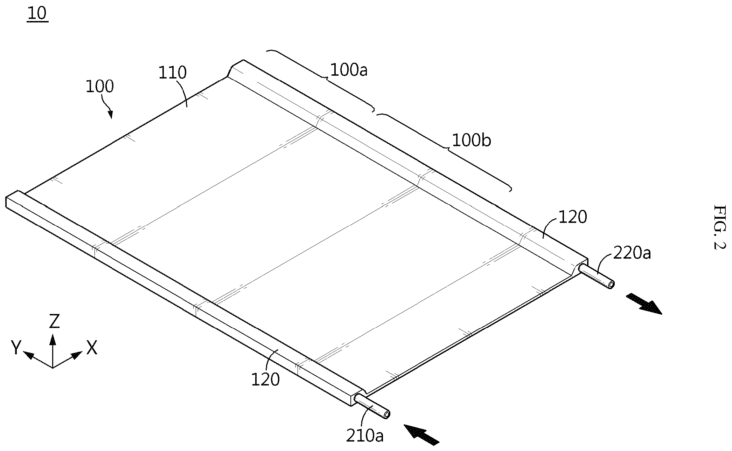

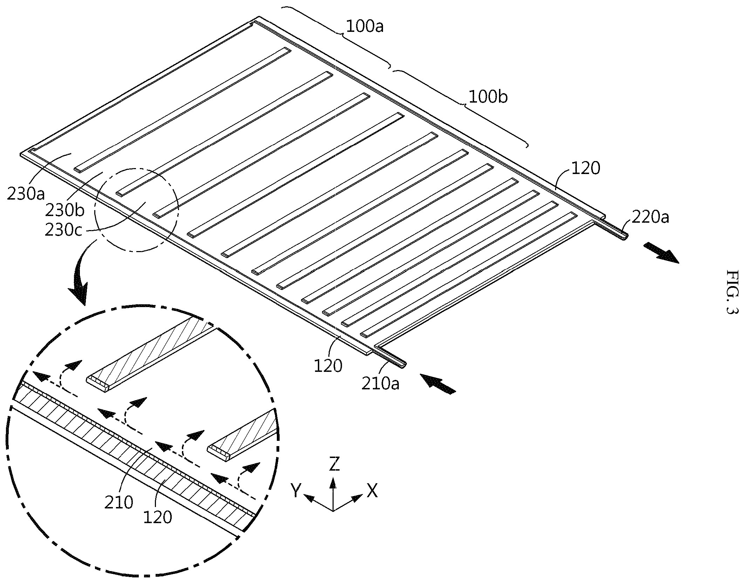

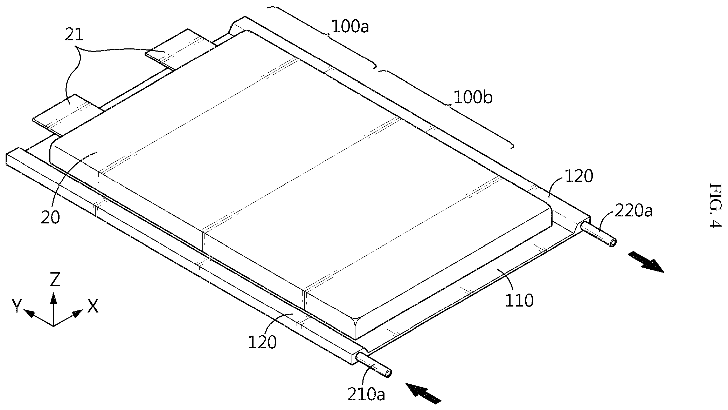

FIG. 2 is a perspective view showing a cooling jacket according to an embodiment of the present disclosure, FIG. 3 is a perspective view showing an inner configuration of the cooling jacket of FIG. 2, and FIG. 4 is a perspective view showing that a battery cell is disposed at the cooling jacket of FIG. 2.

Referring to FIGS. 2 to 4, a cooling jacket 10 for cooling a battery cell 20 according to an embodiment of the present disclosure includes a plate-shaped cooling plate 100 and a plurality of cooling channels 200 provided inside the cooling plate 100. Here, the battery cell 20 may be a pouch-type secondary battery.

As will be explained later in detail, the cooling jacket 10 of the present disclosure has an excellent cooling performance due to a short heat transfer path as compared with a conventional perimeter cooling plate, and may reduce the temperature deviation inside the battery cell 20, thereby further extending the life span of the battery cell 20.

Specifically, seeing the configuration of the cooling jacket 10, the cooling plate 100 may be provided in the form of a metal sheet-type plate. The metal material may be an aluminum or aluminum alloy with high thermal conductivity and a light weight among metals. However, without being limited thereto, a plastic material such as polyethylene with low thermal conductivity may also be used. Metal materials such as copper, gold and silver or non-metallic ceramic materials such as aluminum nitride and silicon carbide with very high thermal conductivity may also be used.

The cooling plate 100 may include a planar portion 110 having a wide flat shape and includes edge portions 120 respectively formed at both sides of the planar portion 110 and having a greater thickness than the planar portion 110. A battery cell 20 may be placed on the cooling plate 100 so that one surface of the battery cell 20 is brought into close contact with the planar portion 110 of the cooling plate 100. For example, one battery cell 20 may be closely disposed on the upper surface and the lower surface of the cooling plate 100, respectively, and the cooling plate 100 and the battery cell 20 may exchange heat in this state.

The edge portion 120 of the cooling plate 100 may be provided to extend from one end to the other end along a longitudinal direction of the cooling plate 100, namely a vertical direction (a Y-axis direction). The distance between both edge portions 120 may be determined in advance according to the width of the battery cell 20 to be cooled. In this case, the battery cell 20 is positioned between both edge portions 120. Here, the edge portions 120 may prevent the battery cell 20 from moving in a left and right direction, and the battery cell 20 may be correctly guided by both edge portions 120 without being distorted, when being disposed on the cooling plate 100.

As shown in FIG. 2, the edge portion 120 may be provided in the form of, for example, a bar to support and mechanically reinforce the planar portion of the cooling plate 100 with a thin design.

Also, as will be explained later, a coolant supply manifold channel 210 and a coolant discharge manifold channel 220 are located inside the edge portions 120. Since the edge portions 120 of the cooling plate 100 are formed thicker than the planar portion, the edge portions 120 may accommodate the coolant supply manifold channel 210 and the coolant discharge manifold channel 220 with a relatively large diameter.

The coolant supply manifold channel 210 and the coolant discharge manifold channel 220 serve as passages for supplying and discharging a coolant into and out of the cooling plate 100. In order to smoothly supply the coolant to the cooling plate 100, the cooling plate 100 may have as a greater diameter as possible.

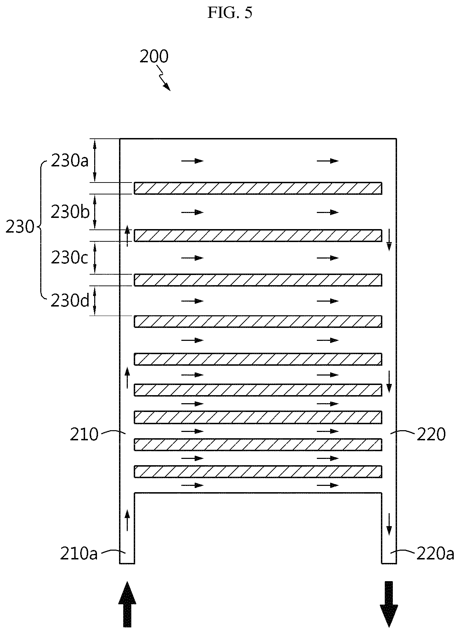

Referring to FIGS. 3 and 5 together, the plurality of cooling channels 200 include a coolant supply manifold channel 210, a coolant discharge manifold channel 220 and non-uniform cooling channels 230. The plurality of cooling channels 200 have a tubular shape through which the coolant may flow, and may be embedded inside the cooling plate 100.

More specifically, the coolant supply manifold channel 210 and the coolant discharge manifold channel 220 are respectively located inside the edge portions 120 of the cooling plate 100 as described above, and the non-uniform cooling channels 230 may be located inside the planar portion 110 of the cooling plate.

For example, the coolant supply manifold channel 210 and the coolant discharge manifold channel 220 may be disposed to extend along the vertical direction of the cooling plate 100 in the form of a cylindrical pipe, and the non-uniform cooling channels 230 having a thin film form may be disposed to extend the horizontal direction of the cooling plate 100 in a thin pipe shape so as to be embedded inside the planar portion 110 of the cooling plate. As will be explained later in detail, the non-uniform cooling channels 230 are basically formed to have great widths compared to thickness, but the widths may be non-uniform.

One end 210a of the coolant supply manifold channel and one end 220a of the coolant discharge manifold channel extend from the inside of the cooling plate 100 to the outside. One end 210a of the coolant supply manifold channel and one end 220a of the coolant discharge manifold channel extending outward may be connected to an external tube such as a coolant supply tube or a coolant discharge tube. Though not shown in detail for convenience of illustration, the coolant supply manifold channel 210 and the coolant discharge manifold channel 220 may include a plurality of connection ports formed on the paths thereof, so that the non-uniform cooling channels 230 may be connected thereto.

The non-uniform cooling channels 230 are disposed to be spaced apart from each other by a predetermined distance and cross the planar portion 110 of the cooling plate in a horizontal direction (an X-axis direction), and both ends of the non-uniform cooling channels 230 are connected to the coolant supply manifold channel 210 and the discharge manifold channel 220, respectively.

According to this configuration, the coolant may be introduced through the coolant supply manifold channel 210 from the outside of the cooling jacket 10, flow along the edge portions 120 of the cooling plate 100, and be branched to the non-uniform cooling channels 230 to rapidly cool the planar portion of the cooling plate 100 as a whole. In addition, the coolant passing through the non-uniform cooling channels 230 may be discharged out of the cooling jacket 10 through the coolant discharge manifold channel 220.

Meanwhile, the non-uniform cooling channels 230 of this embodiment may be formed to have non-uniform widths depending on the positions at which they are disposed.

For example, in the one-directional battery cell 20 as shown in FIG. 4, two electrode leads 21 may be oriented in the same direction and the portion where the electrode leads 21 are located may be placed in a first low-temperature portion 100a of the cooling plate. Here, as shown in FIGS. 3 and 4, the first low-temperature portion 100a of the cooling plate means a region that is in contact with a drawing portion of the electrode lead 21 of the battery cell 20 when the battery cell 20 is placed on the cooling jacket 10, and a second low-temperature portion 100b of the cooling plate 100 is conceptually defined to mean a central region of the cooling plate 100.

In this embodiment, the first low-temperature portion 100a is provided to one region in the cooling plate 100, since the non-uniform cooling channels 230 are designed in consideration of the positions of the electrode leads 21 on the assumption that a positive electrode lead and a negative electrode lead are adjacent to each other in the one-directional battery cell 20. Namely, if the cooling jacket is fabricated based on a bidirectional battery cell at which a positive electrode lead and a negative electrode lead are spaced from each other in opposite directions, the non-uniform cooling channels 230 may be designed so that the first low-temperature portion 100a is provided to two regions according to the positions where the positive electrode lead and the negative electrode lead are placed.

Seeing this embodiment in detail with reference to FIG. 5, the non-uniform cooling channels 230 inside the first low-temperature portion 100a are formed to have a greater width than the non-uniform cooling channels 230 in the other portions. The non-uniform cooling channels 230 have widths gradually increasing from the second low-temperature portion 100b of the cooling plate 100 toward the first low-temperature portion 100a, and the widths of the second low-temperature portion 100b do not vary greatly toward a coolant inlet and a coolant outlet.

For example, a first non-uniform cooling channel 230a located at an outermost side, and second, third and fourth non-uniform cooling channels 230b, 230c, 230d located next thereto may be formed to have greater widths step by step. In addition, in the one-directional battery cell 20, fifth and subsequent non-uniform cooling channels 230 may have substantially uniform widths, considering that the heat generation is relatively smaller as being farther from the electrode lead 21.

If the widths of the non-uniform cooling channels 230 inside the cooling plate 100 are gradually increased from one end to the other end of the cooling plate 100, the flow rate of the coolant respectively flowing through the cross sections of the non-uniform cooling channels 230 is gradually increased, so that the non-uniform cooling channel 230a at the outermost side has the largest heat capacity. Thus, in the cooling plate 100, it may be regarded that the first low-temperature portion 100a has a relatively higher heat capacity than the second low-temperature portion 100b.

As explained above, the battery cell 20 has a heat generation pattern in which the heat generation is greatest as being closest to the electrode lead 21. Thus, the first low-temperature portion 100a of the cooling plate having the largest heat capacity may be disposed to face the portion adjacent to the electrode lead 21 of the battery cell 20 so that the temperature of the portion adjacent to the electrode lead 21 is lowered to the level of the other portions.

Since the non-uniform cooling channels 230 of the present disclosure are configured to provide a differential flow rate corresponding to the heat generation pattern inside the battery cell 20 as described above, it is possible to reduce the temperature deviation in the battery cell 20. Also, the cooling jacket 10 of the present disclosure may give excellent cooling performance since the heat transfer path is improved compared to the conventional perimeter cooling plate by embedding the plurality of cooling channels 200 in the cooling plate 100.

In addition, according to the configuration of the plurality of cooling channels 200 of the presenting disclosure, since the cross-sectional area of the entire flow path is larger than that of the conventional perimeter cooling plate, even though the flow rate is slowed at a flow rate of 1 LPM (Litter per Minute) per module, the coolant pressure drop is reduced compared to the conventional perimeter cooling plate. For this reason, it is possible to circulate the coolant even though a low-output coolant circulation pump is used.

Next, the configuration of the cooling jacket 10 according to the present disclosure will be described briefly. The same reference sign denotes the same component, and the same component will not described in detail. The following description will be focused on features different from those of the former embodiment.

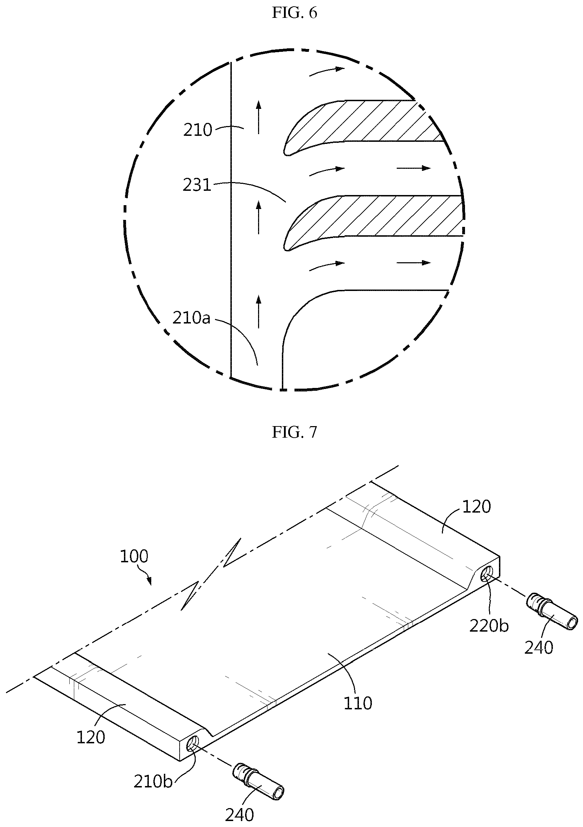

FIG. 6 is a diagram showing a connection portion of a non-uniform cooling channel according to another embodiment of the present disclosure.

Referring to FIG. 6, in the cooling jacket 10 according to another embodiment of the present disclosure, both ends forming connection portions 231 of the non-uniform cooling channels 230 may have a rounded shape and be connected to the coolant supply manifold channel 210 and the coolant discharge manifold channel 220, respectively.

For example, the non-uniform cooling channels 230 may be configured to have a straight line region and a curved line region. Since the curved line region is provided between the straight line of the coolant supply manifold channel 210 and the straight line region of the non-uniform cooling channels 230, it is possible to mitigate the vortex formation and reduce the frictional force at the branched point where the coolant flow is changed as compared with the former embodiment. As a result, it is possible to prevent the flow rate from being lowered since the coolant may flow smoothly in the cooling channel.

FIG. 7 is a diagram showing a part of the plurality of cooling channels according to still another embodiment of the present disclosure.

According to still another embodiment of the present disclosure, the plurality of cooling channels 200 and the cooling plate 100 may be integrally formed. In other words, different from the former embodiments where the plurality of cooling channels 200 are prepared as separate components and then embedded in the cooling plate 100, in the cooling jacket of this embodiment, flow paths corresponding to the plurality of cooling channels 200 are integrally formed inside the cooling plate 100.

The cooling jacket of this embodiment may further include connection tubes 240 that may be respectively coupled to an opening 210b of the coolant supply manifold channel and an opening 220b of the coolant discharge manifold channel to facilitate connection with an external coolant supply and discharge tube. The connection tube 240 may be made of a flexible material whose shape is deformable. If the connection tube 240 is used, it is easier to connect the cooling jacket 10 to the external coolant supply and discharge tube.

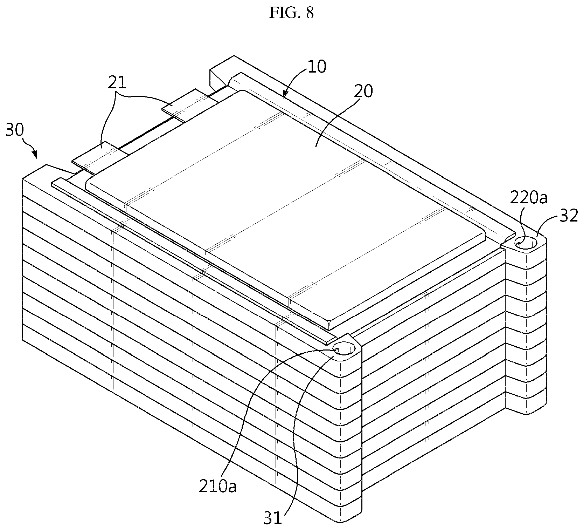

FIG. 8 is a perspective view schematically showing a battery module according to an embodiment of the present disclosure.

Referring to FIG. 8, a battery module according to the present disclosure may include cooling jackets 10 as described above, battery cells 20 disposed in close contact with the upper surface and the lower surface of the cooling jackets 10, and stacking frames 30 respectively configured to support the cooling jackets 10 and the battery cells 20 and provided to be assembled with each other so as to be stacked in one direction.

The stacking frames 30 serve to stack the battery cells 20 and hold the battery cells 20 not to move. Also, the stacking frames 30 are configured to be stacked on one another so that the battery cells 20 are guided to be assembled.

The stacking frames 30 may be assembled with each other, for example, in a snap-fit manner. In addition, the stacking frames 30 may have tube forming holes 31, 32 at one side thereof, respectively, so that the tube forming holes 31, 32 form a coolant supply and discharge tube along the stacking direction. In this case, it is not needed to separately add a coolant supply and discharge component, thereby saving costs and allowing a compact design of the battery module.

In the cooling jacket 10 described above, one end of the coolant supply manifold channel 210 and one end of the coolant discharge manifold channel 220 may be connected directly to the coolant supply and discharge tubes, respectively. Thus, the battery module may circulate the coolant through the coolant supply and discharge tubes formed by assembling the stacking frames, and the cooling jackets 10 may be connected to the coolant supply and discharge tubes and receive the coolant therethrough to cool the battery cells 20.

Meanwhile, the battery module may further include various devices (not shown) for controlling charge and discharge of the battery cells 20, for example a battery management system (BMS), a current sensor, a fuse and the like. The battery module may be used as an energy source for an electric vehicle, a hybrid electric vehicle, or a power storage system.

Meanwhile, when the terms indicating up, down, left and right directions are used in the specification, it is obvious to those skilled in the art that these terms are selected merely for convenience in explanation and may vary based on a location of a target or an observer.

## Claims

1. A cooling jacket, which includes a plate-shaped cooling plate (100) and a plurality of cooling channels (200) provided in the cooling plate (100) and is adapted to be disposed close to one surface of a battery cell (20) to absorb heat of the battery cell (20) ,
wherein the plurality of cooling channels (200) include:
a coolant supply manifold channel (210) and a coolant discharge manifold channel (220) respectively disposed at both sides of the cooling plate (100) and extending from the inside of the cooling plate (100) to the outside so that one end (210a, 220a) thereof is exposed out; and
non-uniform cooling channels (230) disposed to be spaced apart from each other by a predetermined distance and having both ends respectively connected to the coolant supply manifold channel (210) and the coolant discharge manifold channel (220) across the cooling plate (100), the non-uniform cooling channels (230) having non-uniform widths,
wherein the width of the non-uniform cooling channels (230) is greater than thickness of the non-uniform cooling channels (230),
wherein among the non-uniform cooling channels (230), non-uniform cooling channels (230) located inside a first low-temperature portion (100a) of the cooling plate (100), which is to be in contact with a drawing portion of an electrode lead of the battery cell (20), have a greater width than non-uniform cooling channels (230) located inside the other portions of the cooling plate (100).
wherein the cooling plate (100) has edge portions (120) respectively formed at both sides thereof along a longitudinal direction of the cooling plate (100) and having a greater thickness than the other portions thereof, and
wherein the coolant supply manifold channel (210) and the coolant discharge manifold channel (220) are located inside the edge portions (120).

2. The cooling jacket (10) according to claim 1,
wherein the widths of the non-uniform cooling channels (230) are gradually increased from a second low-temperature portion (100b) of the cooling plate (100), which corresponds to a central region of the cooling plate (100), toward the first low-temperature portion (100a) of the cooling plate (100).

3. The cooling jacket (10) according to claim 1,
wherein the plurality of cooling channels (200) have a tubular shape and are embedded inside the cooling plate (100).

4. The cooling jacket (10) according to claim 1,
wherein the plurality of cooling channels (200) are formed integrally with the cooling plate (100).

5. The cooling jacket (10) according to claim 4, further comprising:
flexible connection tubes (240) respectively coupled to openings of the coolant supply manifold channel (210) and the coolant discharge manifold channel (220).

6. The cooling jacket (10) according to claim 1,
wherein the non-uniform cooling channels (230) are disposed to intersect the coolant supply manifold channel (210) and the coolant discharge manifold channel (220).

7. The cooling jacket (10) according to claim 1,
wherein both ends of the non-uniform cooling channels (230) have a rounded shape.

8. A battery module, comprising:
battery cells disposed to be in close contact with an upper surface and a lower surface of cooling jackets (10) defined in any one of claims 1 to 7; and
stacking frames (30) configured to support the cooling jackets (10) and the battery cells (20) and provided to be assembled with each other so as to be stacked in one direction,
wherein the stacking frames (30) are assembled with each other to form a tube forming hole (31, 32) that serves as a coolant supply and discharge tube along a stacking direction thereof, and one end of the coolant supply manifold channel (210) and one end of the coolant discharge manifold channel (220) are respectively connected to the coolant supply and discharge tube.

## Patentansprüche

1. Kühlmantel, der eine plattenförmige Kühlplatte (100) und eine Vielzahl von in der Kühlplatte (100) bereitgestellten Kühlkanälen (200) beinhaltet und angepasst ist, um nahe einer Oberfläche einer Batteriezelle (20) angeordnet zu werden, um Wärme der Batteriezelle (20) aufzunehmen,
wobei die Vielzahl von Kühlkanälen (200) beinhalten:
einen Kühlmittelzufuhr-Verteilerkanal (210) und einen Kühlmittelablass-Verteilerkanal (220), die jeweils an beiden Seiten der Kühlplatte (100) angeordnet sind und sich vom Inneren der Kühlplatte (100) nach außen erstrecken, so dass ein Ende (210a, 220a) davon freiliegt; und
ungleichförmige Kühlkanäle (230), die angeordnet sind, um in einem vorbestimmten Abstand voneinander beabstandet zu sein, und deren beide Enden über die Kühlplatte (100) jeweils mit dem Kühlmittelzufuhr-Verteilerkanal (210) und dem Kühlmittelablass-Verteilerkanal (220) verbunden sind, wobei die ungleichförmigen Kühlkanäle (230) ungleichförmige Breiten aufweisen,
wobei die Breite der ungleichförmigen Kühlkanäle (230) größer ist als eine Dicke der ungleichförmigen Kühlkanäle (230),
wobei unter den ungleichförmigen Kühlkanälen (230) ungleichförmige Kühlkanäle (230), die sich innerhalb eines ersten Niedertemperaturabschnitts (100a) der Kühlplatte (100) befinden, der mit einem Ziehabschnitt einer Elektrodenleitung der Batteriezelle (20) in Kontakt treten soll, eine größere Breite aufweisen als ungleichförmige Kühlkanäle (230), die sich innerhalb der anderen Abschnitte der Kühlplatte (100) befinden,
wobei die Kühlplatte (100) Randabschnitte (120) aufweist, die jeweils an beiden Seiten davon entlang einer Längsrichtung der Kühlplatte (100) gebildet sind und eine größere Dicke als die anderen Abschnitte davon aufweisen, und
wobei sich der Kühlmittelzufuhr-Verteilerkanal (210) und der Kühlmittelablass-Verteilerkanal (220) innerhalb der Randabschnitte (120) befinden.

2. Kühlmantel (10) nach Anspruch 1,
wobei die Breiten der ungleichförmigen Kühlkanäle (230) von einem zweiten Niedertemperaturabschnitt (100b) der Kühlplatte (100), der einem zentralen Bereich der Kühlplatte (100) entspricht, in Richtung des ersten Niedertemperaturabschnitts (100a) der Kühlplatte (100) hin allmählich zunehmen.

3. Kühlmantel (10) nach Anspruch 1,
wobei die Vielzahl von Kühlkanälen (200) eine röhrenförmige Gestalt aufweisen und innerhalb der Kühlplatte (100) eingebettet sind.

4. Kühlmantel (10) nach Anspruch 1,
wobei die Vielzahl von Kühlkanälen (200) einstückig mit der Kühlplatte (100) gebildet sind.

5. Kühlmantel (10) nach Anspruch 4, weiter umfassend:
flexible Verbindungsrohre (240), die jeweils mit Öffnungen des Kühlmittelzufuhr-Verteilerkanals (210) und des Kühlmittelablass-Verteilerkanals (220) gekoppelt sind.

6. Kühlmantel (10) nach Anspruch 1,
wobei die ungleichförmigen Kühlkanäle (230) angeordnet sind, um den Kühlmittelzufuhr-Verteilerkanal (210) und den Kühlmittelablass-Verteilerkanal (220) zu schneiden.

7. Kühlmantel (10) nach Anspruch 1,
wobei beide Enden der ungleichförmigen Kühlkanäle (230) eine abgerundete Gestalt aufweisen.

8. Batteriemodul, umfassend:
Batteriezellen, die angeordnet sind, um, wie in einem der Ansprüche 1 bis 7 definiert, in engem Kontakt mit einer oberen Oberfläche und einer unteren Oberfläche von Kühlmänteln (10) zu stehen; und
Stapelrahmen (30), die konfiguriert sind, um die Kühlmäntel (10) und die Batteriezellen (20) zu stützen, und bereitgestellt sind, um miteinander zusammengesetzt zu werden, um in einer Richtung gestapelt zu werden,
wobei die Stapelrahmen (30) miteinander zusammengesetzt sind, um ein rohrbildendes Loch (31, 32) zu bilden, das als Kühlmittelzufuhr- und -ablassrohr entlang einer Stapelrichtung davon dient, und
ein Ende des Kühlmittelzufuhr-Verteilerkanals (210) und ein Ende des Kühlmittelablass-Verteilerkanals (220) jeweils mit dem Kühlmittelzufuhr- und -ablassrohr verbunden sind.

## Revendications

1. Une chemise de refroidissement, qui inclut une plaque de refroidissement en forme de plaque (100) et une pluralité de canaux de refroidissement (200) fournis dans la plaque de refroidissement (100) et est adaptée pour être disposée à proximité d'une surface d'une cellule de batterie (20) afin d'absorber la chaleur de la cellule de batterie (20),
dans laquelle la pluralité de canaux de refroidissement (200) incluent :
un canal collecteur d'alimentation en liquide de refroidissement (210) et un canal collecteur d'évacuation de liquide de refroidissement (220) respectivement disposés des deux côtés de la plaque de refroidissement (100) et s'étendant de l'intérieur de la plaque de refroidissement (100) vers l'extérieur de sorte qu'une extrémité (210a, 220a) de ceux-ci soit exposée ; et
des canaux de refroidissement non uniformes (230) disposés de manière à être espacés les uns des autres d'une distance prédéterminée et ayant les deux extrémités respectivement raccordées au canal collecteur d'alimentation en liquide de refroidissement (210) et au canal collecteur d'évacuation de liquide de refroidissement (220) à travers la plaque de refroidissement (100), les canaux de refroidissement non uniformes (230) ayant des largeurs non uniformes,
dans laquelle la largeur des canaux de refroidissement non uniformes (230) est supérieure à l'épaisseur des canaux de refroidissement non uniformes (230),
dans laquelle, parmi les canaux de refroidissement non uniformes (230), les canaux de refroidissement non uniformes (230) situés à l'intérieur d'une première partie à basse température (100a) de la plaque de refroidissement (100), qui doit être en contact avec une partie d'extraction d'un conducteur d'électrode de la cellule de batterie (20), ont une largeur supérieure à celle des canaux de refroidissement non uniformes (230) situés à l'intérieur des autres parties de la plaque de refroidissement (100),
dans laquelle la plaque de refroidissement (100) a des parties de bord (120) respectivement formées des deux côtés de celle-ci le long d'une direction longitudinale de la plaque de refroidissement (100) et ayant une épaisseur supérieure à celle des autres parties de celle-ci, et
dans laquelle le canal collecteur d'alimentation en liquide de refroidissement (210) et le canal collecteur d'évacuation de liquide de refroidissement (220) sont situés à l'intérieur des parties de bord (120).

2. La chemise de refroidissement (10) selon la revendication 1,
dans laquelle les largeurs des canaux de refroidissement non uniformes (230) augmentent progressivement à partir d'une deuxième partie à basse température (100b) de la plaque de refroidissement (100), qui correspond à une région centrale de la plaque de refroidissement (100), vers la première partie à basse température (100a) de la plaque de refroidissement (100).

3. La chemise de refroidissement (10) selon la revendication 1,
dans laquelle la pluralité de canaux de refroidissement (200) ont une forme tubulaire et sont intégrés à l'intérieur de la plaque de refroidissement (100).

4. La chemise de refroidissement (10) selon la revendication 1,
dans laquelle la pluralité de canaux de refroidissement (200) sont formés d'un seul tenant avec la plaque de refroidissement (100).

5. La chemise de refroidissement (10) selon la revendication 4, comprenant en outre :
des tubes de raccordement flexibles (240) respectivement couplés à des ouvertures du canal collecteur d'alimentation en liquide de refroidissement (210) et du canal collecteur d'évacuation de liquide de refroidissement (220).

6. La chemise de refroidissement (10) selon la revendication 1,
dans laquelle les canaux de refroidissement non uniformes (230) sont disposés de manière à croiser le canal collecteur d'alimentation en liquide de refroidissement (210) et le canal collecteur d'évacuation de liquide de refroidissement (220).

7. La chemise de refroidissement (10) selon la revendication 1,
dans laquelle les deux extrémités des canaux de refroidissement non uniformes (230) ont une forme arrondie.

8. Module de batterie, comprenant :
des cellules de batterie disposées de manière à être en contact étroit avec une surface supérieure et une surface inférieure de chemises de refroidissement (10) définies dans l'une quelconque des revendications 1 à 7 ; et
des cadres d'empilage (30) configurés pour supporter les chemises de refroidissement (10) et les cellules de batterie (20) et prévus pour être assemblés les uns avec les autres de manière à être empilés dans une direction,
dans lequel les cadres d'empilage (30) sont assemblés les uns avec les autres pour former un trou de formation de tube (31, 32) qui sert de tube d'alimentation et d'évacuation de liquide de refroidissement le long d'une direction d'empilage de ceux-ci, et
une extrémité du canal collecteur d'alimentation en liquide de refroidissement (210) et une extrémité du canal collecteur d'évacuation de liquide de refroidissement (220) sont respectivement raccordées au tube d'alimentation et d'évacuation de liquide de refroidissement.
